# EUROPEAN PATENT APPLICATION

(11) **EP 3 439 310 A1**
(43) Date of publication of application: **06.02.2019**
(21) Application number: 17184234.7
(22) Date of filing: 01.08.2017
(51) Int. Cl.: H04N 21/41, H04M 1/02

(54) **SYSTEM WITH STAND FOR AUGMENTED REALITY**

(71) Applicant: Realfiction ApS, 2100 København Ø (DK)
(72) Inventor: DYRHOLM, Clas, 2100 København Ø (DK); SIMONSEN, Peter Allan, 2100 København Ø (DK)
(74) Representative: Zacco Denmark A/S

(57) **Abstract**

Disclosed is a device for providing augmented reality to a user. The device comprises a stand configured to be arranged on a surface. The device comprises a semi-transparent reflector extending from the stand. The device comprises a receiving means configured to receive an image source. The image source is configured to extend from the stand. The image source is configured to be arranged opposite the semi-transparent reflector in the stand. The image source is arranged for projecting a real image onto the semi-transparent reflector thereby providing a virtual image, the virtual image being perceived as appearing behind the stand for the user located in front of the stand.

## Description

### FIELD

The present disclosure relates to a device for providing augmented reality to a user, the device comprising: a stand configured to be arranged on a surface; a semi-transparent reflector extending from the stand; and a receiving means configured to receive an image source, where the image source is configured to extend from the stand.

### BACKGROUND

Devices, such as toy systems, providing augmented reality to a user is known, where the augmented reality is a live direct or indirect view of a physical, real-world environment whose elements are augmented by computer-generated sensory input such as sound, video, or graphics.

However, there is a desire to improve a user's perception and/or interaction with augmented reality devices.

### SUMMARY

Disclosed is a device for providing augmented reality to a user. The device comprises a stand configured to be arranged on a surface. The device comprises a semi-transparent reflector extending from the stand. The device comprises a receiving means configured to receive an image source. The image source is configured to extend from the stand. The image source is configured to be arranged opposite the semi-transparent reflector in the stand. The image source is arranged for projecting a real image onto the semi-transparent reflector thereby providing a virtual image, the virtual image being perceived as appearing behind the stand for the user located in front of the stand.

The device as disclosed provides an improved user perception, experience and/or interaction with the augmented reality. As the image source is arranged for projecting a real image onto the semi-transparent reflector thereby providing a virtual image, where the virtual image is perceived by the user as appearing behind the stand, the user will experience a presence of the virtual image. If the virtual image comprises an object or a character, such as a doll, a cartoon character, a figure etc., the device provides an illusion for the user that the object or character is present behind the stand of the device, e.g. close to the user in the same room. For the user, for example a child, such experienced presence of an object or character, may provide a powerful, intense, and vivid user experience, which may enhance the joy of play for the child.

The device is configured such that when the user located in front of the stand, looks over the image source arranged in the receiving means and looks through the semi-transparent reflector, the user will perceive the virtual image as appearing behind the stand.

Augmented reality (AR) is a live direct or indirect view of a physical, real-world environment whose elements are augmented by computer-generated sensory input such as sound, video, or graphics. It is related to a more general concept called computer-mediated reality, in which a view of reality is modified by a computer. Augmented reality enhances the user's current perception of reality, whereas in contrast, virtual reality replaces the real world with a simulated one. Augmentation techniques are typically performed in real time and in semantic context with environmental elements, such as overlaying supplemental information.

With the help of advanced AR technology, e.g. adding computer vision and object recognition, the information about the surrounding real world of the user becomes interactive and digitally manipulable. Information about the environment and its objects is overlaid on the real world. This information can be virtual or real. Augmented reality brings out the components of the digital world into a person's perceived real world.

A virtual image is an image formed when the outgoing rays from a point on an object always diverge. The virtual image appears to be located at the point of apparent divergence. Because the rays never really converge, a virtual image cannot be projected onto a screen. The virtual images can be located by tracing the real rays that emerge from an optical device (lens, mirror, or some combination) backward to a perceived point of origin.

In contrast, a real image is one that is formed when the outgoing rays form a point converging at a real location. Real images can be projected onto a diffuse reflecting screen, but a screen is not necessary for the image to form.

A mirror, e.g. a plane mirror, forms a virtual image positioned behind the mirror. Although the rays of light seem to come from behind the mirror, light from the source only exists in front of the mirror. The image in a plane mirror is not magnified, that is, the image is the same size as the object, and appears to be as far behind the mirror as the object is in front of the mirror.

A concave reflector, or concave mirror, is also capable of producing a virtual image if the object is within the focal length. Such an image will be magnified due to the concave shape of the reflector.

The device comprises a stand or base configured to be arranged on a surface. The surface, which the stand is configured to be arranged on, may be a table or floor. The stand is configured for supporting the semi-transparent reflector and the receiving means. Thus the semi-transparent reflector and/or the receiving means may be arranged in or provided in the stand. The stand may have a base configured to be in contact with the surface. The base may have any two-dimensional shape, such as circular, triangular or rectangular, such as a square or oblong. The stand may have a height, the height may be equal along the outline of the base and/or be equal across the base. The height may vary along the outline of the base and/or vary across the base. The base may be about 30 cm to 40 cm long and about 20 cm to 30 cm wide, if rectangular, for example the base may be about 35 cm long and about 24 cm wide. The base may have a diameter of about 20 cm to about 35 cm, such as about 30 cm, if circular. The height of the stand may be about 1 cm to about 3 cm, such as about 2 cm. The height of the stand may vary across the base, such that the height is about 4 cm in the centre of the base, and the height is about 0.5 cm in the ends or at the edges of the base.

The device comprises a semi-transparent reflector extending from the stand. The semi-transparent reflector is a device that causes reflection. As the reflector is semi-transparent, it is possible to see through the reflector. The reflector may be straight or curved, such as concave. The semi-transparent reflector may be defined by its radius of curvature. The reflector may be rectangular with rounded off corners. The reflector may be about 10 cm to about 25 cm wide, such as about 11 cm or about 20 cm wide. The reflector may be about 20 cm to about 45 cm long, such as about 23 cm or about 40 cm long. The reflector may be about 2 mm to about 4 mm thick, such as about 2.5 mm or about 3.5 mm thick.

The device comprises a receiving means configured to receive an image source. The image source is configured to extend from the stand. The receiving means may be supported by the stand.

The image source may be a portable electronic device, such as a smart device, such as a tablet or mobile phone.

The receiving means may comprise clamping means for detachable fixing of the image source. The clamping means may comprise a spring for fixing of the image source. The clamping means may comprise press-fitting for fixing of the image source.

The image source is configured to be arranged opposite the semi-transparent reflector in the stand. Thus the image source may be arranged in a first end of the stand. The semi-transparent reflector may be arranged in a second end of the stand. The image source may be defined by a flat plane. The semi-transparent reflector may be defined by a flat plane. The plane of the image source may be opposite the plane of the semi-transparent reflector. The image source and the semi-transparent reflector may not be arranged adjacent or abutting each other. The image source and semi-transparent reflector may be arranged with a distance between each other. The distance between the image source and the semi-transparent reflector may be about the length or the diameter of the base, such as 20 cm. The distance between the image source and the semi-transparent reflector may be smaller than the length or the diameter of the base, such as 15 cm.

The size of the semi-transparent reflector, e.g. defined by the radius of curvature of the reflector, is configured to match or fit the size of the image source. Or vice versa the size of the image source is configured to match or fit the size of the reflector e.g. defined by the radius of curvature of the reflector. Tablets are larger than smartphones or personal digital assistants with screens 7 inches (18 cm) or larger, measured diagonally. Thus if the image source is a tablet, the size of the reflector may be adapted to the size of a tablet, the size of the tablet being e.g. 7 inches (18 cm) or larger, measured diagonally. If the image source is a smartphone or mobile phone, the size of the reflector should be adapted to the smaller size of a mobile phone, the size of the mobile phone being e.g. 5.2 inches or smaller, measured diagonally.

The radius of curvature of the semi-transparent reflector may be larger than the distance between the receiving means (image source) and the semi-transparent reflector. Thus the centre of a sphere, defined by the radius of curvature, may be behind the user.

The structural or optical setup for the device may comprise that a center of a sphere is defined, and an axis going through the center of the sphere and through the image source and through the semi-transparent reflector and through the perceived virtual image. The semi-transparent reflector, such as the radius of curvature of the reflector, may define the sphere.

A reflective substantially spherical surface of radius "R" will have a focal length of R/2. For purposes of this application, the radius of a concave semi-transparent reflector will be defined as the general curvature of the inner surface of the reflector, i.e. the side of the concave semi-transparent reflector that is facing the image source.

The image source is arranged for projecting a real image onto the semi-transparent reflector thereby providing a virtual image, the virtual image being perceived as appearing behind the stand for the user located in front of the stand.

The real image projected by the image source may be a single image and/or a video comprising a plurality of image frames and/or animations and/or computer graphics etc. If the real image comprises a character, the virtual image comprises this character, and accordingly the character appears for user as being present on the opposite side of the stand relative to the user.

Another person who is not located in front of the device and accordingly is not looking through the semi-transparent reflector, but for example is viewing the device from the side, will not see the virtual image. Thus for this other person there is no virtual image perceived as appearing behind the stand, as the virtual image is not a real image present in a location, but only a perceived virtual image for the user located in front of the device.

In some embodiments the device is configured to facilitate interaction between the user of the device and the virtual image, and the virtual image may comprise a character such that the user experiences a perceived presence of the character behind the stand.

In some embodiments a plane of the semi-transparent reflector is substantially parallel to a plane of the image source. The image source may be a flat tablet or mobile phone, thus the plane of the image source may be the flat plane defined by the flat surface of a screen of the image source. The semi-transparent reflector may be flat or curved. If the semi-transparent reflector is flat, the plane of the semi-transparent reflector may be its flat plane. If the semi-transparent reflector is curved, the plane of the semi-transparent reflector may be defined as a tangent to the curvature or as a section of the sphere defining the curved semi-transparent reflector.

In some embodiments the semi-transparent reflector is curved or concave, thereby providing a magnified virtual image. It is an advantage to use a curved semi-transparent reflector as the perceived presence of the virtual image, e.g. character, may be enhanced and improved, if the virtual image is magnified. For example the size of the magnified virtual image may correspond to the true size of a specific doll, even though the real image of that doll from the image source is smaller than the true size of the doll. Thus the user's experience of the perceived virtual image may be enhanced as the size of the virtual image may correspond to the true size of the object or character in the image, when the virtual image is magnified relative to the real image.

A curved semi-transparent reflector has an inner surface facing the receiving means and the image source. A curved semi-transparent reflector has an outer surface facing the perceived location of the virtual image.

Alternatively, the semi-transparent reflector may be flat.

In some embodiments the inclination of a plane of the semi-transparent reflector is between 60-90 degrees relative to the stand, such as between 70-90 degrees, such as between 80-90 degrees, such as between 85-90 degrees. The stand is configured to be arranged on a surface, such as a horizontal surface. Thus the inclination of the plane of the semi-transparent reflector may be between 60-90 degrees relative to horizontal. This corresponds to an inclination of the plane of the semi-transparent reflector being between 0-30 degrees relative to vertical.

The semi-transparent reflector may be flat or curved. If the semi-transparent reflector is flat, the plane of the semi-transparent reflector may be its flat plane. If the semi-transparent reflector is curved, the plane of the semi-transparent reflector may be defined as a tangent to the curvature or as a section of the sphere defining the curved semi-transparent reflector. A tangent to the curvature may be a tangent to a surface of the sphere defined by the radius of curvature of the semi-transparent reflector.

In some embodiments the radius of curvature of the semi-transparent reflector is between 300 mm-1200 mm, such as between 300 mm - 1000 mm, such as between 600 mm - 1000 mm, such as between 800 mm - 1000 mm etc.

Radius of curvature may be defined as: The semi-transparent reflector (or a spherical lens or mirror surface) has a center of curvature located in (x, y, z) either along or decentred from the system local optical axis. The vertex of the lens surface is located on the local optical axis. The distance from the vertex to the center of curvature is the radius of curvature of the surface.

In some embodiments the image source is a portable electronic device, such as a smart device, such as a tablet or mobile phone.

Thus the tablet or mobile phone is configured to be arranged in the receiving means in the stand, and the real image displayed on the screen of the tablet or mobile phone is then projected onto the semi-transparent reflector thereby providing a virtual image, the virtual image being perceived as appearing behind the stand for the user located in front of the stand. The user may accordingly use his/her own tablet or mobile phone to arrange in the stand thereby providing the augmented reality. The device will typically be sold without the image source as the user can arrange his/her own image source, e.g. tablet or mobile phone, in the stand of the device. The user may then select the real image on the image source to be projected onto the semi-transparent reflector. The real image may be a still image, a video, animation, computer graphics and/or a combination thereof etc.

The image source may not be configured to be arranged in the device permanently, but the image source may be configured to be attached and detached from the receiving means, as the user will typically use the image source, e.g. tablet or mobile phone, for other purposes than in the device for providing augmented reality, e.g. for phone conversations, for working, for watching movies or TV, for listening to music or radio, and/or for other types of entertainment. Alternatively, the image source may be configured to be arranged in the device permanently.

Tablets typically have screens in size of e.g. 7 inches (18 cm) or larger, measured diagonally. Smartphones or mobile phones typically have a size of e.g. 5.2 inches or smaller, measured diagonally.

Tablets may be from various manufacturers, e.g. from Apple producing tablets such as iPad, iPad Pro, iPad mini etc., or from Samsung producing tablets such as Galaxy Tab etc.

Smartphones or mobile phones may be from various manufacturers, e.g. Apple producing mobile phones such as the iPhone, or from Samsung producing mobile phones such as the Galaxy Note etc.

The image source may be flat or plane like a typical or traditional tablet or mobile phone.

Alternatively, the image source may be concave or curved. It is an advantage to use a concave or curved image source together with a concave or curved semi-transparent reflector, because distortion of the virtual image can then be reduced or avoided. If the semi-transparent reflector is concave or curved and the image source is flat or plane, then the virtual image may be distorted and the virtual image may not be entirely correct. The radius of curvature of a concave or curved image source may correspond to the radius of curvature of the semi-transparent reflector.

A concave or curved image source may be fixedly concave or curved. Alternatively and/or additionally a concave or curved image source may be flexible, such as bendable or adjustable, whereby the curvature of the image source can be modified.

The image source may be a screen or display connected to an electronic device, such as a portable electronic device, such as a tablet or mobile phone. Thus the electronic device may generate the real image, and the image device being a screen or display connected to the electronic device, may then display the real image to be projected onto the semi-transparent reflector.

In some embodiments the receiving means comprises clamping means for detachable fixing of the image source. The clamping means may be a temporary fastening device used to hold or secure the image source tightly in the receiving means to prevent movement or separation of the image source in the receiving means through the application of inward pressure. The receiving means is configured to receive, hold, fix or secure the image source. The image source is configured to be attached and detached from the receiving means, as the image source will typically be used for other purposes than in the device for providing augmented reality. The receiving means comprises clamping means for detachable fixing of the image source such that the image source can be attached and detached easily and such that the image source is fixed in position when attached in the receiving means. The receiving means may be configured to receive different sizes of image sources, e.g. small and large tablets, and/or small and large mobile phones, thus the clamping means may be configured to fix different sizes of image sources, e.g. 5.2 inches or 7 inches measured diagonally, and different thicknesses of image sources, e.g. thin or thick image sources.

In some embodiments the clamping means comprises a spring for fixing of the image source.

In some embodiments the clamping means comprises press-fitting for fixing of the image source. Thus the clamping means may comprise a rear portion and a front portion, where the rear portion is configured to adjoin the rear side of the image source, and where the front portion is configured to adjoin the front side of the image source, i.e. the side, e.g. screen or display, of the image source from where the real image is projected.

In some embodiments the semi-transparent reflector comprises a coating for providing a suitable contrast of the virtual image in a present light condition.

The coating may determine the balance between reflection and transparency. The semi-transparent reflector may have the properties that it is partly transparent or semi-transparent and that it provides a reflection or mirroring. Thus the semi-transparent reflector may be partially reflective and partially transparent. The substrate of the semi-transparent reflector may be completely or entirely transparent, and the coating may provide the property of reflection, and accordingly also the property of semitransparency. By controlling the amount of coating on the semi-transparent reflector, the balance between reflection and transmission can be controlled or modified. The reflector may be coated with, or has encased within, a thin and almost-transparent layer of metal. The result is a mirrored surface that reflects some light and is penetrated by the rest. The coating may be made of any suitable material, such as metal. The metal may be any suitable metal, such as aluminium. The coating may be defined by a light reflection of about between 45% to 75%, such as between 50% to 70%, such as between 55% to 65%, such as about 60%. The coating may be defined by a light transmission of about between 25% to 55%, such as between 30% to 50%, such as between 35% to 45%, such as about 40%.

A present light condition may be for example daylight or light inside a building etc.

In some embodiments the semi-transparent reflector is configured to be repositioned relative to the stand.

In some embodiments the repositioning of the semi-transparent reflector provides that the device is configured to be in a use-position or in a storage-position. The use-position of the device is disclosed in the aspects above, where the device comprises: a stand configured to be arranged on a surface, a semi-transparent reflector extending from the stand, and a receiving means configured to receive an image source, where the image source is configured to extend from the stand and configured to be arranged opposite the semi-transparent reflector in the stand, and where the image source is arranged for projecting a real image onto the semi-transparent reflector thereby providing a virtual image, the virtual image being perceived as appearing behind the stand for the user located in front of the stand.

The storage-position may comprise that the semi-transparent reflector is positioned in or on the stand, such as in the base, i.e. the reflector is not extending from the stand, and the image source is not arranged in the receiving means but detached from the receiving means. A lid for the device may be provided which can be placed over the stand to cover and protect the semi-transparent reflector when it is not in use.

In some embodiments the repositioning of the semi-transparent reflector provides that the semi-transparent reflector is configured to be arranged in a landscape or portrait orientation. Thus if the semi-transparent reflector is oblong, such as wider in one direction than in another direction, the semi-transparent can be arranged in two different ways in the stand, i.e. in portrait orientation which is an upright or vertical positioning, or in a landscape orientation which is a horizontal position.

In some embodiments the receiving means is an integrated part of the stand or a separate part of the stand.

In some embodiments the stand and/or the receiving means comprises a structure configured for directing sound from a speaker in the image source towards the semi-transparent reflector. When the sound from the speaker is directed towards the semi-transparent reflector, the sound may be reflected back from the semi-transparent reflector towards the user.

It is an advantage of the structure directing sound from speakers in the image source towards the reflector that it provides the effect that the user experiences, senses or perceives that the sound comes from the virtual image as sound is reflected by the reflector back to the user. Thus the user will perceive that the sound comes from the virtual image, e.g. a character, which may provide the effect that the character is speaking or singing etc. This may enhance the augmented reality experience for the user.

In some embodiments the structure is channels and/or cavities within the stand and/or within the receiving means.

According to an aspect, disclosed is a system for providing augmented reality to a user, the system comprising the device as defined above. The system may further comprise a pointing device configured to be held in the hand of the user, and the pointing device may be configured to be detected by a camera in the image source. The pointing device may for example comprise LED diodes to control the virtual image. For example the pointing device may be used to select items in the virtual image. If for example the virtual image comprises a dressing room for a character such as a doll, the pointing device may be used to select a dress for the doll. If for example the virtual image comprises an equipment room for a character such as a doll, the pointing device may be used to select a weapon or gadget for the doll. If for example the virtual image comprises a construction room for an object such as a vehicle, the pointing device may be used to select a building part for the vehicle.

The present invention relates to different aspects including the device described above and in the following, and corresponding system, methods, devices, kits, uses and/or product means, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1 schematically illustrates an example of a device for providing augmented reality to a user.
Fig. 2 schematically illustrates an example of a device for providing augmented reality to a user.
Fig. 3 schematically illustrates an example of a device for providing augmented reality to a user.
Fig. 4 schematically illustrates an example of a device for providing augmented reality to a user.
Fig. 5 schematically illustrates an example of circle or sphere.
Fig. 6 schematically illustrates an example of a perceived virtual image.
Fig. 7 schematically illustrates an example of a real image on the image source.
Fig. 8 schematically illustrates an example of a device for providing augmented reality to a user.
Fig. 9 schematically illustrates an example of a device for providing augmented reality to a user.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

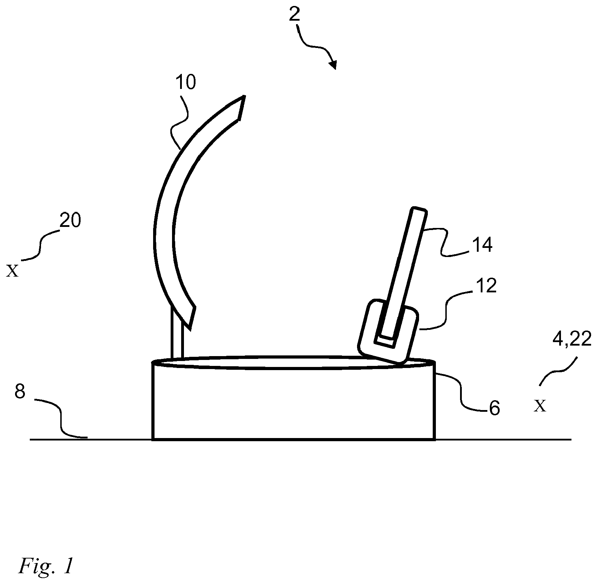

Fig. 1 schematically illustrates an example of a device 2 for providing augmented reality to a user 4. The device 2 comprises a stand 6 configured to be arranged on a surface 8, such as a floor or a table. The device 2 comprises a semi-transparent reflector 10 extending from the stand 6. The semi-transparent reflector 10 may be curved as shown in fig. 1 or flat. The device 2 comprises a receiving means 12 configured to receive an image source 14. The semi-transparent reflector 10 and the receiving means 12 are supported in the stand 6. The image source 14 is configured to extend from the stand 6. The image source 14 is configured to be arranged opposite the semi-transparent reflector 10 in the stand 6. The image source 14 is arranged for projecting a real image (not shown) onto the semi-transparent reflector 10 thereby providing a virtual image (not shown), the virtual image being perceived as appearing behind 20 the stand 6 for the user 4 located in front 22 of the stand 6.

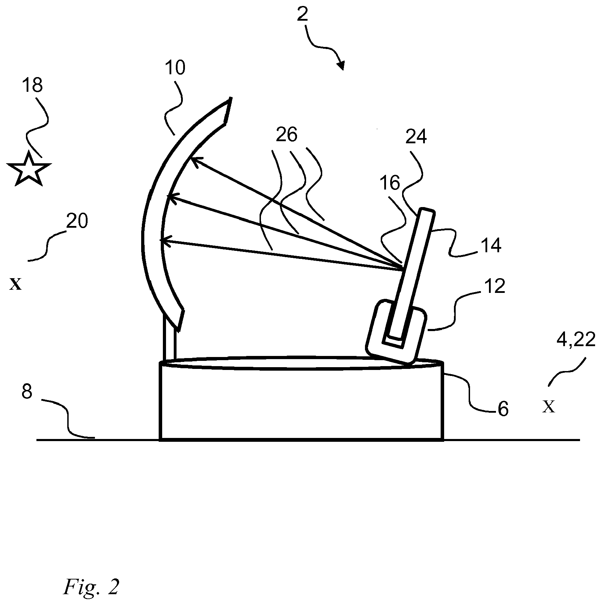

Fig. 2 schematically illustrates an example of a device 2 for providing augmented reality to a user 4. The device 2 comprises a stand 6 configured to be arranged on a surface 8, such as a floor or a table. The device 2 comprises a semi-transparent reflector 10 extending from the stand 6. The semi-transparent reflector 10 may be curved as shown in fig. 1 or flat. The device 2 comprises a receiving means 12 configured to receive an image source 14. The semi-transparent reflector 10 and the receiving means 12 are supported in the stand 6. The image source 14 is configured to extend from the stand 6. The image source 14 is configured to be arranged opposite the semi-transparent reflector 10 in the stand 6. The image source 14 is arranged for projecting a real image 16 from the screen 24 of the image source 14 onto the semi-transparent reflector 10 thereby providing a virtual image 18, the virtual image 18 being perceived as appearing behind 20 the semi-transparent reflector 10 and/or behind 20 the stand 6 for the user 4 located in front 22 of the stand 6. The projection of the real image 16 onto the semi-transparent reflector 10 is illustrated by the light rays 26.

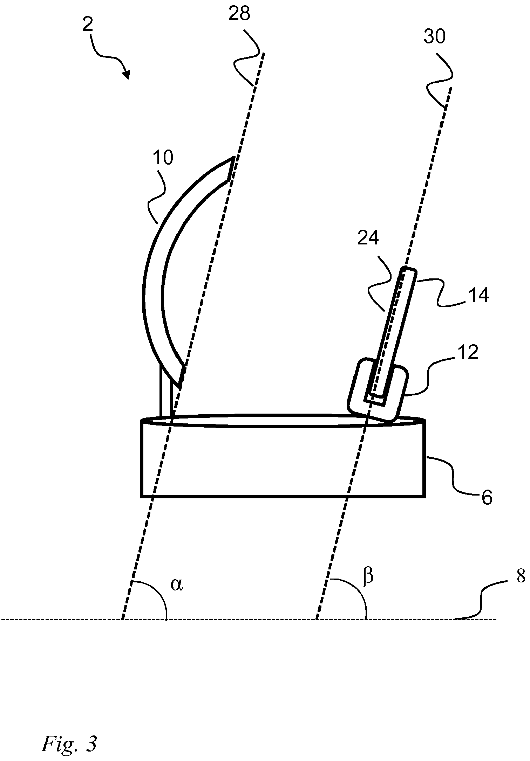

Fig. 3 schematically illustrates an example of a device 2 for providing augmented reality to a user (not shown). The device 2 comprises a stand 6 configured to be arranged on a surface 8. The device 2 comprises a semi-transparent reflector 10 extending from the stand 6. The semi-transparent reflector 10 may be curved as shown in fig. 1 or flat. The device 2 comprises a receiving means 12 configured to receive an image source 14. The semi-transparent reflector 10 and the receiving means 12 are supported in the stand 6. The image source 14 is configured to extend from the stand 6. The image source 14 is configured to be arranged opposite the semi-transparent reflector 10 in the stand 6.

The plane 28 of the semi-transparent reflector 10 is substantially parallel to a plane 30 of the image source 14. The image source 14 may be a flat tablet or mobile phone, thus the plane 30 of the image source 14 may be the flat plane defined by the flat surface of a screen 24 of the image source 14. The semi-transparent reflector 10 may be flat or curved. If the semi-transparent reflector 10 is flat, the plane 28 of the semi-transparent reflector 10 may be its flat plane. If the semi-transparent reflector 10 is curved as shown in fig. 3, the plane 28 of the semi-transparent reflector 10 may be defined as a section of the sphere defining the curved semi-transparent reflector 10 as shown in fig 3, or as a tangent to the curvature of the semi-transparent reflector 10.

The inclination α of the plane 28 of the semi-transparent reflector is between α=60-90 degrees relative to the horizontal part of stand 6, such as between 70-90 degrees, such as between 80-90 degrees, such as between 85-90 degrees. The stand 6 is configured to be arranged on a surface 8, such as a horizontal surface. Thus the inclination α of the plane 28 of the semi-transparent reflector 10 may be between α=60-90 degrees relative to a horizontal surface 8. This corresponds to an inclination of the plane 28 of the semi-transparent reflector 10 being between 0-30 degrees relative to vertical.

As the plane 30 of the image source 14 is substantially parallel to the plane 28 of the semi-transparent reflector 10, the inclination β of the plane 30 of the image source is also between β=60-90 degrees relative to the horizontal part of stand 6, such as between 70-90 degrees, such as between 80-90 degrees, such as between 85-90 degrees.

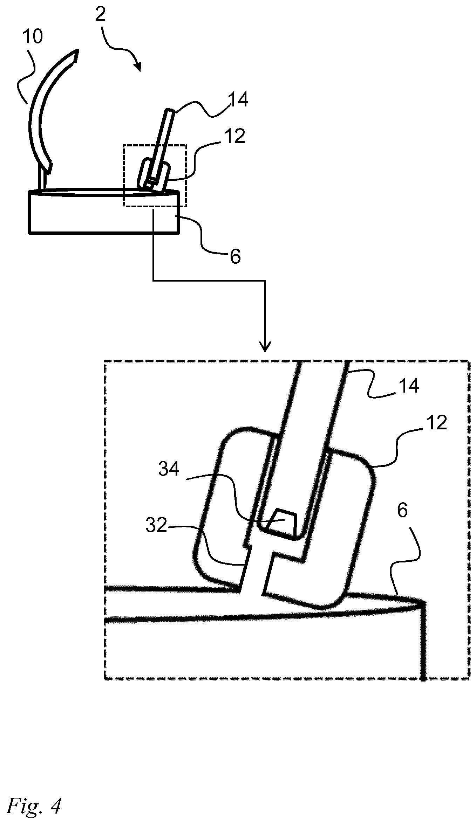

Fig. 4 schematically illustrates an example of a device 2 for providing augmented reality to a user (not shown). The device 2 comprises a stand 6 configured to be arranged on a surface (not shown). The device 2 comprises a semi-transparent reflector 10 extending from the stand 6. The semi-transparent reflector 10 may be curved as shown in fig. 1 or flat. The device 2 comprises a receiving means 12 configured to receive an image source 14. The semi-transparent reflector 10 and the receiving means 12 are supported in the stand 6. The image source 14 is configured to extend from the stand 6. The image source 14 is configured to be arranged opposite the semi-transparent reflector 10 in the stand 6.

In the enlargement of fig. 4 shown in the dotted box, it can be seen that the stand 6 and/or the receiving means 12 comprises a structure 32 configured for directing sound from a speaker 34 in the image source 14 towards the semi-transparent reflector 10. When the sound from the speaker 34 is directed towards the semi-transparent reflector 10, the sound may be reflected back from the semi-transparent reflector 10 towards the user.

The structure 32 may be channels and/or cavities within the stand 6 and/or within the receiving means 12.

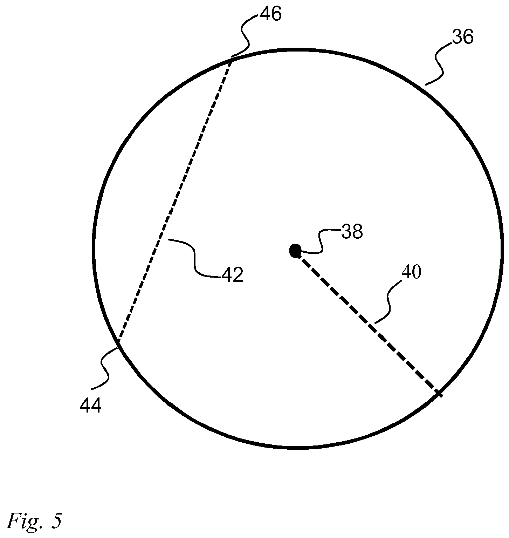

Fig. 5 schematically illustrates an example of circle or sphere 36. The centre 38 of the circle or sphere 36 is the point 38 equidistant from the points on the circle 36. The radius 40 is a line segment joining the centre 38 of the circle 36 to any point on the circle 36. A chord 42 is a line segment whose endpoints 44, 46 lie on the circle 36.

As the semi-transparent reflector may be curved, the radius of curvature of the semi-transparent reflector may correspond to the radius 40 of the circle 36.

As the semi-transparent reflector may be curved, the plane 28 of the semi-transparent reflector may correspond to a chord 42 being a line segment whose endpoints 44, 46 lie on the circle.

As the semi-transparent reflector may be curved, the semi-transparent reflector may correspond to a circle segment of the circle 36, the circle segment extending between the points 44 and 46 of the circle.

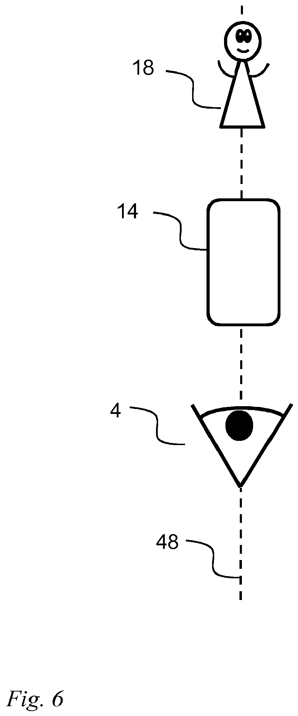

Fig. 6 schematically illustrates an example of a perceived virtual image. The image source 14 is arranged for projecting a real image (not shown) onto the semi-transparent reflector (not shown) thereby providing a virtual image 18, the virtual image 18 being perceived as appearing behind the stand for the user 4 located in front of the stand.

The structural or optical setup for the device (not shown) may comprise that a center of a sphere is defined (not shown), and an axis 48 going through the center of the sphere and through the image source 14 and through the semi-transparent reflector and though the perceived virtual image 18.

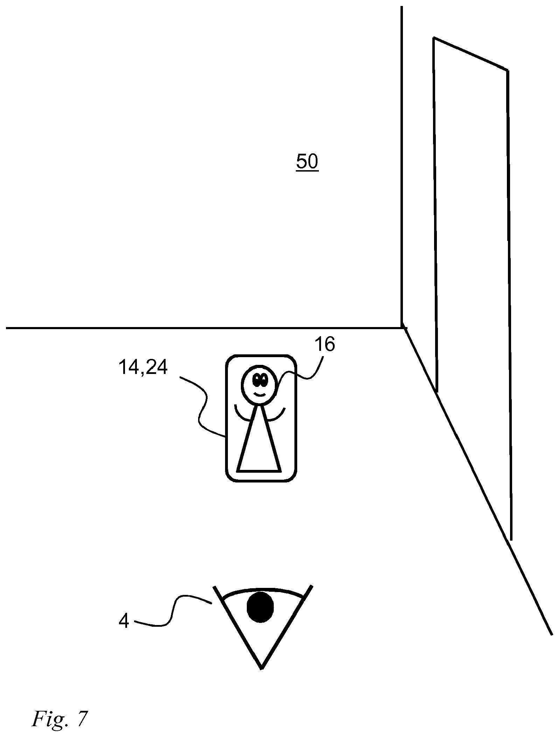

Fig. 7 schematically illustrates an example of a real image on the image source. The image source 14 is arranged for projecting a real image 16, such as displaying a real image 16 on its screen 24. The image source 14 is arranged for projecting the real image 16 onto the semi-transparent reflector (not shown) thereby providing a virtual image (not shown). Fig. 7 illustrates that the user 4 can see the real image 16 on the screen 24 of the image source 14. Fig. 7 shows no projection of the real image 16 onto the semi-transparent reflector.

Fig. 7 also shows a location 50, such as a room with floor, walls, and a door, where the user is seeing the real image 16 on the image source 14.

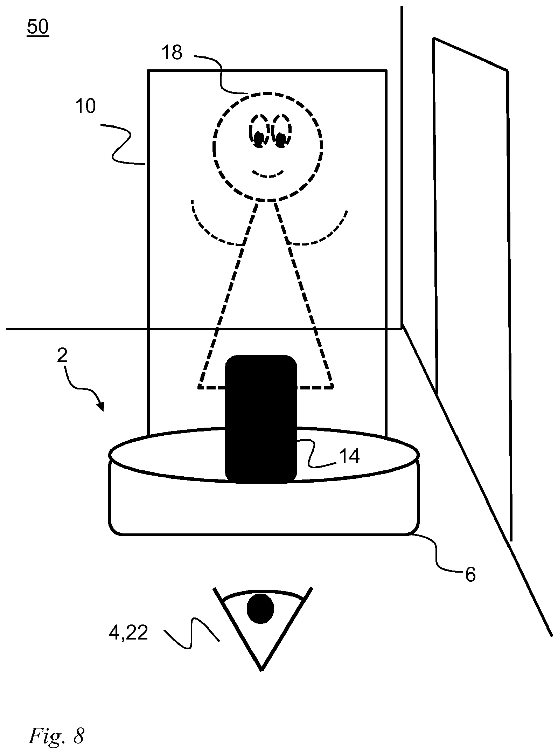

Fig. 8 schematically illustrates an example of a device 2 for providing augmented reality to a user 4. The device 2 comprises a stand 6 configured to be arranged on a surface, such as a floor or a table. The device 2 comprises a semi-transparent reflector 10 extending from the stand 6. The semi-transparent reflector 10 may be curved as shown in fig. 1 or flat. The device 2 comprises a receiving means (not shown) configured to receive an image source 14. The image source 14 is configured to extend from the stand 6. The image source 14 is configured to be arranged opposite the semi-transparent reflector 10 in the stand 6. The image source 14 is arranged for projecting a real image (not shown) onto the semi-transparent reflector 10 thereby providing a virtual image 18, the virtual image 18 being perceived as appearing behind the stand 6 for the user 4 located in front 22 of the stand 6.

Fig. 8 also shows a location 50, such as a room with floor, walls, and a door, where the user 4 is seeing the virtual image 18 behind the semi-transparent reflector 10 and/or behind the stand 6.

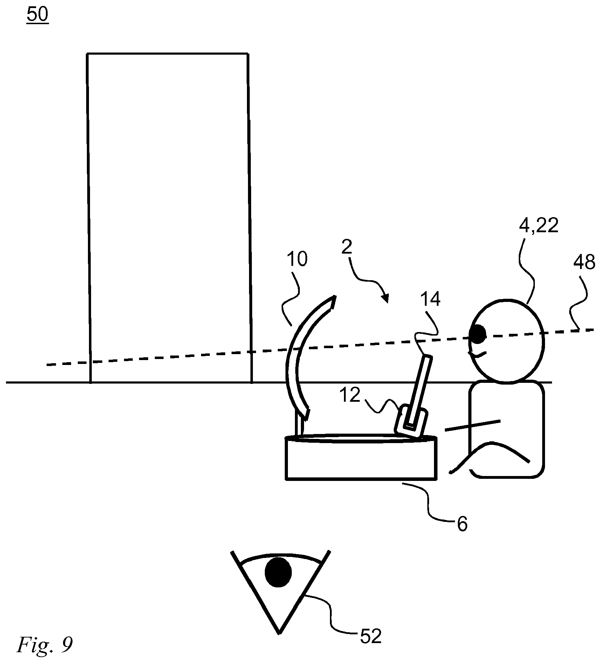

Fig. 9 schematically illustrates an example of a device 2 for providing augmented reality to a user 4. The device 2 comprises a stand 6 configured to be arranged on a surface, being a floor in this figure. The device 2 comprises a semi-transparent reflector 10 extending from the stand 6. The semi-transparent reflector 10 may be curved as shown in the figure or flat. The device 2 comprises a receiving means 12 configured to receive an image source 14. The image source 14 is configured to extend from the stand 6. The image source 14 is configured to be arranged opposite the semi-transparent reflector 10 in the stand 6. The image source 14 is arranged for projecting a real image (not shown) onto the semi-transparent reflector 10 thereby providing a virtual image (not shown), the virtual image being perceived as appearing behind the stand 6 for the user 4 located in front 22 of the stand 6.

For another person 52 who is not located on or near the axis 48, but for example is viewing the device 2 from the side, thereby not looking through the semi-transparent reflector 10, but only seeing it from the side, this person 52 will not see the virtual image 18. Thus for person 52 there is no virtual image perceived as appearing behind the stand 6, as the virtual image 18 is not a real image present in the location 50, but only a perceived virtual image for the user 4 located in front of the device 2.

Fig. 9 also shows a location 50, such as a room with floor, walls, and a door, where the user 4 is seeing the virtual image (not shown) behind the semi-transparent reflector 10 and/or behind the stand 6, and where a person 52 arranged off the axis 48 is not seeing the virtual image .

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### LIST OF REFERENCES

- 2: device
- 4: user
- 6: stand
- 8: surface
- 10: semi-transparent reflector
- 12: receiving means
- 14: image source
- 16: real image
- 18: virtual image
- 20: behind the stand
- 22: in front of the stand
- 24: screen of image source
- 26: light rays
- 28: plane of semi-transparent reflector
- 30: plane of image source
- 32: structure for directing sound
- 34: speaker in image source
- 36: sphere or circle
- 38: centre of the circle or sphere
- 40: radius of circle
- 42: chord, line segment
- 44: endpoint of chord/line segment on the circle
- 46: endpoint of chord/line segment on the circle
- 48: axis
- 50: location
- 52: other person

## Claims

1. A device for providing augmented reality to a user, the device comprising:
- a stand configured to be arranged on a surface;
- a semi-transparent reflector extending from the stand;
- a receiving means configured to receive an image source, where the image source is configured to extend from the stand,
wherein the image source is configured to be arranged opposite the semi-transparent reflector in the stand;
wherein the image source is arranged for projecting a real image onto the semi-transparent reflector thereby providing a virtual image, the virtual image being perceived as appearing behind the stand for the user located in front of the stand.

2. The device according to claim 1, wherein the device is configured to facilitate interaction between the user of the device and the virtual image, wherein the virtual image comprises a character such that the user experiences a perceived presence of the character behind the stand.

3. The device according to any of the preceding claims, wherein a plane of the semi-transparent reflector is substantially parallel to a plane of the image source.

4. The device according to any of the preceding claims, wherein the semi-transparent reflector is curved or concave, thereby providing a magnified virtual image.

5. The device according to any of the preceding claims, wherein the inclination of a plane of the semi-transparent reflector is between 60-90 degrees relative to the stand, such as between 70-90 degrees, such as between 80-90 degrees, such as between 85-90 degrees.

6. The device according to any of the preceding claims, wherein the radius of curvature of the semi-transparent reflector is between 300 mm-1200 mm.

7. The device according to any of the preceding claims, wherein the image source is a portable electronic device, such as a smart device, such as a tablet or mobile phone.

8. The device according to any of the preceding claims, wherein the receiving means comprises clamping means for detachable fixing of the image source.

9. The device according to any of the preceding claims, wherein the semi-transparent reflector comprises a coating for providing a suitable contrast of the virtual image in a present light condition.

10. The device according to any of the preceding claims, wherein the semi-transparent reflector is configured to be repositioned relative to the stand.

11. The device according to claim 10, wherein the repositioning of the semi-transparent reflector provides that the device is configured to be in a use-position or in a storage-position.

12. The device according to claim 10 or 11, wherein the repositioning of the semi-transparent reflector provides that the semi-transparent reflector is configured to be arranged in a landscape or portrait orientation.

13. The device according to any of the preceding claims, wherein the stand and/or the receiving means comprises a structure configured for directing sound from a speaker in the image source towards the semi-transparent reflector.

14. The device according to claim 13, wherein the structure is channels and/or cavities within the stand and/or within the receiving means.

15. System for providing augmented reality to a user, the system comprising the device according to claim 1, and wherein the system further comprises a pointing device configured to be held in the hand of the user, and wherein the pointing device is configured to be detected by a camera in the image source.
